(19) Europäisches Patentamt

European Patent Office

Office européen des brevets

(11) EP 0 908 097 A1

(12) **EUROPEAN PATENT APPLICATION**
published in accordance with Art. 158(3) EPC

(43) Date of publication:
14.04.1999 Bulletin 1999/15

(21) Application number: 97909741.7

(22) Date of filing: 04.11.1997

(51) Int. Cl.⁶: **A01N 37/10**, A01N 37/28,
A01N 43/08, A01N 43/76

(86) International application number:
PCT/JP97/04015

(87) International publication number:
WO 98/21950 (28.05.1998 Gazette 1998/21)

(84) Designated Contracting States:
CH DE FR GB LI

(30) Priority: 21.11.1996 JP 326208/96

(71) Applicant:
Plant Biological Defence System Laboratories
Niigata 959-04 (JP)

(72) Inventor:
MIYAZAWA, Jun-Plant Biological Defense
System Lab.
Niigata 959-04 (JP)

(74) Representative:
Baillie, Iain Cameron et al
Langner Parry,
52-54 High Holborn
London WC1V 6RR (GB)

(54) **METHOD FOR PREVENTING OR CONTROLLING VIRAL DISEASES OF PLANTS**

(57) The present invention is intended to provide a method for preventing or controlling plant viral disease, and the present invention particularly relates to a method for preventing or controlling plant viral disease characterized in that a compound having a peroxidase inducing activity in plant is brought into contact with a plant, as well as a preparation for preventing or controlling plant viral disease which contains, as an active component, a benzoic acid derivative, such as 4-hydroxybenzohydrazide, or a salt thereof, or a compound having a furan ring, such as 2-pyromucic acid, or a salt thereof, or another such compound having a peroxidase inducing activity.

## Description

### TECHNICAL FIELD

The present invention relates to a method for preventing or controlling viral diseases of plants, and more particularly to a novel method for preventing or controlling diseases of plants wherein a compound having a peroxidase inducing activity in a plant is brought into contact with a plant by a suitable means, so as to induce resistance against plant pathogens and thereby allow viral diseases of plants to be effectively prevented or controlled by the inherent resistance of the plant, as well as to a novel preparation for preventing or controlling viral diseases of plants, which contains a compound having a peroxidase inducing activity as an active component.

### BACKGROUND ART

Bactericides are commonly sprayed to prevent plants form being infected by pathogens. No effective chemicals having antiviral activity are thus far known, however. Plants develop self-defense by recognizing pathogen invaded and synthesizing antibacterial substances such as phytoalexins and the like. In known methods for controlling plant disease by exploiting the inherent self-defense capacity of plants, resistance of plant is induced by using a pathogen or a part of it to bring about the suspected infection in a plant (Plant Disease Control: Resistance and Susceptibility, John Wiley and Sons, pp. 259-272 (1981)), but practical use has thus far been limited to attenuated viruses (Shokubutsu Boeki, Vol. 43, p. 11 (1989)).

When a plant is infected with a pathogen, resistance by the plant itself against the pathogen is induced at the infected site of the plant. Information of the infection is also transmitted to sites other than the infected site, resulting in causing an "sensitized stated provided for subsequent infections in the plant, so that the subsequent infection rapidly induces resistance against pathogens in the plant which has originally no resistance. Such resistance is induced in a plant irrespective of species of the plant, and the effects of the resistance last for about one month (Plant Disease Control: Resistance and Susceptibility, John Wiley and Sons, pp. 259-272 (1981)). The information of the infection is transmitted through involvement with salicylic acid to cells outside the infected site (Science, 250, pp. 1002-1004 (1990)), thereby the transcription of genes encoding protein specific to the infection is initiated (Systemic Acquired Resistance: An Inducible Defence Mechanism in Plants, Cambridge University Press, pp. 205-229 (1992)) , and a peroxidase enzyme which has an important part in the synthesis of lignin from hydrogen peroxide and phenols is induced to reinforce the lignin barrier against pathogens to be invaded (Plant Physiol. 101, pp. 193-199 (1993)). Plants are believed to acquire resistance against pathogens through these processes (Cell, 56, pp. 215-224 (1989)).

Although some basic information on the induction of plant resistance against pathogens has thus been obtained, it is only at the most rudimentary level, and no attempts have been made in the past to directly administer specific compounds having a peroxidase induction activity to plants in order to prevent or control plant viral disease, for example.

Based on this information, an object of the present invention is to provide a novel method for preventing or controlling plant viral disease using a resistance-inducing substance in which the inherent resistance of plants against pathogens is exploited to provide substantial resistance effects, without causing chemical injury, as well as a novel agent for preventing or controlling plant viral disease. Based on these information, compounds with a high peroxidase inducing activity have been screened anew to apply them in the prevention or controlling of plant viral disease.

Based on the information that peroxidase is induced by salicylic acid, which is a known signal transduction substance for induced resistance in plants (Plant Physiol. 101, pp. 193-199 (1993)), the inventors screened anew compounds having a peroxidase inducing activity among numerous compounds, and perfected the present invention upon discovering compounds having a resistance-inducing activity as potent as, or greater than, that of salicylic acid which was used as a control.

### SUMMARY OF THE INVENTION

The present invention is intended to provide a method for preventing or controlling plant viral disease. The present invention particularly relates to a method for preventing or controlling plant disease characterized in that a compound having a peroxidase inducing activity in a plant is brought into contact with a plant, as well as a preparation for preventing or controlling plant disease which contains, as an active component, a benzoic acid derivative, such as 4-hydroxybenzohydrazide, or a salt thereof, or a compound having a furan ring, such as 2-pyromucic acid, or a salt thereof, or another such compound a having peroxidase inducing activity.

In the present invention, a compound having a peroxidase inducing activity is brought into contact with a plant so as to develop resistance in the plant against a pathogen before the plant comes into contact with the pathogen, thereby making it possible to prevent the onset of disease by preventing the growth of the pathogen in the plant, even when the plant is infected with the pathogen. The resistance of the plant against the pathogen can be increased to effectively prevent the plant from being infected by the pathogen, so as to control plant viral disease and the prevent decreases in plant harvests.

DISCLOSURE OF THE INVENTION

An object of the present invention is to provide a method for preventing or controlling plant viral disease by using a resistance-inducing substance having substantial effect in inducing plant resistance against a pathogen, without causing virtually chemical injury.

Another object of the present invention is to provide an agent for preventing or controlling plant viral disease using a resistance-inducing substance having substantial effect in inducing plant resistance against a pathogen, without causing virtually chemical injury.

That is, to remedy the drawbacks described above, the present invention is a method for preventing or controlling plant viral disease, characterized in that a compound having a peroxidase inducing activity in a plant is brought into contact with a plant by suitable means.

Another embodiment of the present invention is a method for preventing or controlling plant viral disease as described above, wherein the compound having a peroxidase inducing activity is at least one selected from benzoic acid derivatives or salts thereof, or compounds having a furan ring or salts thereof.

Still another embodiment of the present invention is a method for preventing or controlling plant viral disease as described above, wherein the benzoic acid derivative is 4-hydroxybenzohydrazide, salicylhydrazide, or norpseudoephedrine.

Yet another embodiment of the present invention is a method for preventing or controlling plant viral disease as described above, wherein the compound having a furan ring is 2-pyromucic acid, $\beta$-(2-furyl)acrylic acid, 2-pyromucylhydrazide, furosemide, furazolidone, 2,2'-bifuran-4,4'-dimethyl-5,5'-dicarboxylic acid, or 3-pyromucic acid.

A further embodiment of the present invention is a method for preventing or controlling plant viral disease as defined above, wherein the plant viral disease is mosaic disease of cucumbers, tomatoes, daikon, or Komatsuna (Brassica Rapa).

Still a further embodiment of the present invention is a method for preventing or controlling plant viral disease as described above, wherein a 2-pyromucic acid or 4-hydroxybenzohydrazide hydrochloride of a compound having a peroxidase inducing activity is used in the form of a composition containing the compound in a concentration of at least 0.1 µM.

Yet a further embodiment of the present invention is a composition for preventing or controlling plant viral disease, characterized in that at least one of the aforementioned compounds is contained as an active component.

Another embodiment of the present invention is a method for preparing a composition to prevent or control plant viral disease, characterized in that at least one of the aforementioned compounds is blended as an active component, and a buffer, fertilizer, medium, substrate, or the like is introduced as needed.

The present invention is described in further detail below.

As described above, the present invention is a method for effective preventing or controlling plant viral disease based on the induction of inherent plant resistance against plant pathogens by bringing a compound with peroxidase inducing activity into contact with plants, as well as a composition for preventing and controlling plant viral disease containing a compound having such a peroxidase inducing activity as an active component.

Compounds having plant peroxidase inducing activity which are used in the present invention mean compounds that have action in inducing peroxidase in plants themselves, examples of which include 4-hydroxybenzohydrazide, 2-pyromucic acid, or salts thereof. Examples of salts of 4-hydroxybenzohydrazide include hydrochlorides, phosphates, sulfates, and nitrates, and examples of salts of 2-pyromucic acid include sodium and potassium salts as desired. Examples of the aforementioned compounds include salicylic acid hydrazide, salicylhydroxamic acid, norpseudoephedrine, $\beta$-(2-furyl)acrylic acid, 2-pyromuchydrazide, furosemide, furazolidone, 2,2'-bifuran-4,4'-dimethyl-5,5'-dicarboxylic acid, and 3-pyromucic acid, or salts thereof. These compounds have a high level peroxidase inducing activity in plant. These compounds can be brought into contact with plants to increase resistance the plants against pathogens. In the practical examples given below, 4-hydroxybenzohydrazide hydrochloride and 2-pyromucic acid are given as typical examples, but virtually the same results were obtained in similar tests on other compounds. The means for bringing these compounds into contact with plants is not particularly limited. Examples of suitable means which can be used include adding or mixing the compounds with cultivated soil, immersing the plants in a solution of these substances, coating seeds with the solution, spraying the solution on leaves, adding the solution to liquid fertilizer for hydroponic cultivation, or adding the solution to acclimation medium for virus-free seedlings.

For example, when a compound having peroxidase inducing activity is used as an agent to prevent or control viral disease plant, the compound having peroxidase inducing activity may be used as such, but it is usually mixed with a suitable solid carrier, liquid carrier, gas carrier, surfactant, dispersant, or other such preparation adjuvant for use in desired formulations such as emulsions, liquids, water dispersible powders, powders, granules, oils, aerosols, and flowables. When the compound having peroxidase inducing activity is used as a liquid, it is diluted to a desired concentration, for example, to 0.1 μM or more in the case of 4-hydroxybenzohydrazide, and to 10 μM or more in the case of 2-pyromucic acid, using a suitable diluting medium such as water, a phosphate buffer or another such buffer, or a liquid fertilizer. The plants are then immersed in this solution, or the solution is sprayed on the plants, to bring the compound into contact with the plants. 4-hydroxybenzohydrazide is preferably used in a concentration of 100 to 1000 μM, and 2-pyromucic acid is also preferably used in a concentration of 100 to 1000 μM.

Fertilizer, hydroponic media, acclimation media for virus-free seedlings, and leaf-spraying substrates can also be added as needed. Examples of fertilizer in such cases include LONG or CDU (by Asahi Kasei Kogyo K.K.) or other such slow-acting compound manures. Examples of hydroponic media and acclimation media include HYPONEX (by Murakami Bussan K.K.), Knop's solution, MS media, and other compound liquid fertilizers. Examples of leaf-spraying substrates include HYPONEX leaf spraying solution and other such compound liquid fertilizers. The examples are not limited to these, however, and other types can similarly be used with the same effects.

Typical examples of preparations for preventing or controlling viral diseases of plant in the present invention include preparations obtained by mixing a compound having peroxidase inducing activity with a phosphate buffer (No. 1) and preparations obtained by mixing the compound with liquid fertilizer (No. 2). Of these, Preparation No. 1 may be manufactured in the following manner, for example. That is, a compound or salt thereof adjusted so as to result in a concentration of 200 μM when the preparation is dissolved in water, and monopotassium phosphate and dipotassium phosphate adjusted so as to result in a concentration of 20 mM (pH 5 to 6), can be added and mixed in the form of a powder, or an aqueous solution thereof can be dried by a common method such as spray drying, air drying, or freeze drying, so as to obtain a powder. The compound used here is preferably at least one of 4-hydroxybenzohydrazide, 2-pyromucic acid, or a salt thereof. When Preparation No. 1 is used, the preparation is dissolved in water to prepare, for example, a liquid in which the aforementioned compound having peroxidase inducing activity is adjusted to 200 μM, and the solution is brought into contact with plants by immersion or spraying means.

Preparation No. 2 may be manufactured in the following manner. That is, the compound(s) or salt(s) is (or are) mixed to a concentration of 200 mM in HYPONEX liquid (starting liquid) (horticultural compound fertilizer by Murakami). The compound used here is preferably at least one of 4-hydroxybenzohydrazide, 2-pyromucic acid, or a salt thereof. When Preparation No. 2 is used, the preparation is dissolved in water to prepare a liquid, and is diluted to the same concentration as when common HYPONEX liquid is used. The solution is brought into contact with plants by immersion or spraying means.

Other preparations should also similarly be adjusted so that the aforementioned compound is contained in a concentration of 200 μM. Fertilizers, buffers, liquid fertilizers, hydroponic media, acclimation media for virus-free seedlings, leaf spraying substrates, or other components having the same effects as these, such as diluents, media components, carriers, and substrates, can be added as needed to prepare such preparations.

Plants with which the present invention can be used include, but are not limited to, tomatoes, tobacco, eggplants, pimento, cucumbers, pumpkins, melons, watermelons, corn, soy beans, broad beans, kidney beans, peas, cowpeas, azuki beans, Brassica rapa, Chinese rape, daikon, Chinese cabbage, cabbage, horse radish, beets, lettuce, sunflowers, zinnias, celery, trefoil, dendrobium, daffodils, and amaryllis. The present invention can also be used with other plants, of course.

BEST MODE FOR CARRYING OUT THE INVENTION

The present invention is described in further detail with reference to practical examples. The present invention is not limited to these practical examples, however.

Practical Example 1 (Test to prevent cucumber mosaic disease)

An aqueous solution of a compound having peroxidase inducing activity with a concentration of 200 μM was added (100 mL per pot) to cucumber (variety: Asamidori) seedlings with 3 to 4 main leaves, which had been grown using leaf mold in 300 mL Wagner pots. After 1, 2, or 3 days of irrigation, the plants were inoculated with cucumber mosaic virus (CMV) prepared by the following method.

That is, tomatoes were inoculated with CMV purified standard product, and the leaves of individuals infected by the disease were ground together with 2- to 3-fold 10 mM phosphate buffer (pH 7), and the resulting sap was used as the inoculation source.

The main leaves of plants which had been treated with compounds having peroxidase inducing activity were inoculated with the aforementioned viral liquid by the carborundum method, and cultivation was continued. The plants were examined for the state of the disease 8 days following viral inoculation.

Table 1 shows that the mosaic disease had appeared on leaves in the untreated section, whereas no symptoms were found in sections treated for two or more days with compounds having peroxidase inducing activity.

Table 1

| Inhibition of onset of disease by compounds having peroxidase inducing activity | | |
|---|---|---|
| Compounds having peroxidase inducing activity | Days treated | Percentage onset (%) |
| Untreated | | 33.3 |
| 4-hydroxybenzohydrazide hydrochloride | 1 | 33.3 |
| | 2 | 0 |
| | 3 | 0 |
| 2-pyromucic acid | 1 | 50 |
| | 2 | 0 |
| | 3 | 0 |
| (6 samples per section) | | |

Practical Example 2 (Test to prevent tobacco mosaic disease)

An aqueous solution of a compound having peroxidase inducing activity with a concentration of 200 µM was added (100 mL per pot) to tomato (variety: large Fukuju) seedlings with 3 to 4 main leaves, which had been grown using leaf mold in 300 mL Wagner pots. After 1, 2, or 3 days of irrigation, the plants were inoculated with tobacco mosaic virus (TMV) prepared by the following method.
That is, as the inoculation source was used TMV purified standard product suspended in phosphate buffer (pH 7).
The main leaves of plants which had been treated with compounds having peroxidase inducing activity were inoculated with the aforementioned viral liquid by the carborundum method, and cultivation was continued. The plants were examined for the state of the disease 15 days following viral inoculation.
Table 2 shows that the mosaic disease had appeared on most of the leaves in the untreated section, whereas symptoms were inhibited in sections treated for two or more days with compounds having peroxidase inducing activity.

Table 2

| Inhibition of onset of disease by compounds having peroxidase inducing activity | | |
|---|---|---|
| Compounds having peroxidase inducing activity | Days treated | Percentage onset (%) |
| Untreated | | 83.3 |
| 4-hydroxybenzohydrazide hydrochloride | 1 | 83.3 |
| | 2 | 66.7 |
| | 3 | 16.7 |
| 2-pyromucic acid | 1 | 66.7 |
| | 2 | 16.7 |
| | 3 | 16.7 |
| (6 samples per section) | | |

Practical Example 3 (Test to prevent turnip mosaic disease)

100 mL growing pots containing daikon (Japanese radish) (variety: Miura daikon) seedlings with 3 to 4 main leaves, which had been grown using leaf mold, were immersed for 5 days in aqueous solution of a compound having peroxidase inducing activity with a concentration of 500 µM, and the plants were then inoculated with turnip mosaic virus (TuMV) prepared by the following method.

That is, Komatsuna (Brassica Rapa) leaves affected with the mosaic virus were ground together with 2- to 3-fold phosphate buffer added, and the resulting sap was used as the inoculation source.

The main leaves of plants which had been treated with compounds having peroxidase inducing activity were inoculated with the aforementioned viral liquid by the carborundum method, the plants were then treated with chemicals as described above for another 6 days, the chemical liquid was then removed, and cultivation was continued. The plants were examined for the state of the disease 14 days following viral inoculation.

Table 3 shows that the mosaic virus disease had appeared on most of the leaves in the untreated section, whereas symptoms were inhibited in sections treated for two or more days with compounds having peroxidase inducing activity.

Table 3

| Inhibition of onset of disease by compounds having peroxidase inducing activity | |
|---|---|
| Compounds having peroxidase inducing activity | Percentage onset (%) |
| Untreated | 100 |
| 4-hydroxybenzohydrazide hydrochloride | 70 |
| 2-pyromucic acid | 40 |
| (10 to 12 samples per section) | |

Practical Example 4 (Test to prevent turnip mosaic virus disease)

100 mL growing pots containing Komatsuna (Brassica Rapa) (variety: Aoi komatsuna) seedlings with 3 to 4 true leaves, which had been grown using leaf mold, were immersed for 5 days in aqueous solution of a compound having peroxidase inducing activity with a concentration of 500 µM, and the plants were then inoculated with turnip mosaic virus (TuMV) prepared by the method in Practical Example 3.

The main leaves of plants which had been treated with compounds having peroxidase inducing activity were inoculated with the aforementioned viral liquid by the carborundum method, the plants were then treated with chemicals as described above for another 6 days, the chemical liquid was then removed, and cultivation was continued. The plants were examined for the state of the disease 14 days following viral inoculation.

Table 4 shows that the mosaic virus disease had appeared on most of the leaves in the untreated section, where as symptoms were inhibited in sections treated for two or more days with compounds having peroxidase inducing activity.

Table 4

| Inhibition of onset of disease by compounds having peroxidase inducing activity | |
|---|---|
| Compounds having peroxidase inducing activity | Percentage onset (%) |
| Untreated | 91.7 |
| 4-hydroxybenzohydrazide hydrochloride | 50 |
| 2-pyromucic acid | 25 |
| (4 to 12 samples per section) | |

Practical Example 5 (Test to prevent cucumber mosaic virus disease)

Solution was prepared by mixing and dissolving 4-hydroxybenzohydrazide hydrochloride and 2-pyromucic acid to a concentration of 100 mM in HYPONEX liquid, which is the level resulting in the effects obtained in Practical Example 1, and the resulting solutions were used as the preparations. In Practical Example 1, plants grown in Wagner pots were irrigated with these compounds dissolved in aqueous solution, but here, the same test as in Practical Example 1 was conducted using the aforementioned preparation diluted 1000-fold instead of water with the compounds dissolved therein.

The plants were examined for the state of the disease 8 days following viral inoculation. The diseased state was expressed using the indices indicating the extent to which symptoms had progressed, as shown in Table 5. The indices of all individual plants used in the test were measured, and the mean index pet individual was determined. The following equation was calculated from the index to determine the prevention value.

(index of untreated sections- index of treated sections)/index of untreated sections

Table 6 shows that the main leaves showed signs of mosaic pattern as a result of the development of the mosaic disease in most of the seedlings in the untreated section, whereas symptoms were suppressed in treated sections where plants bad been treated for one day with the preparation, which had been obtained by dissolving compounds having peroxidase inducing activity in HYPONEX liquid, in the same manner as when solution obtained by dissolving the compounds in water was used. The chi squares test revealed a high level of significant difference (1%) between the indices of untreated sections and sections treated with these compounds.

Table 5

| Indices for cucumber mosaic disease | |
| --- | --- |
| Index | Symptoms |
| 0 | Normal |
| 1 | Weak mosaic pattern |
| 2 | Pronounced mosaic pattern |
| (6 samples per section) | |

Table 6

| Inhibition of onset of disease by compounds having peroxidase inducing activity | | |
| --- | --- | --- |
| Compound with peroxidase inducing activity | Index | Prevention value (%) |
| Untreated | 1.5 | 0 |
| 4-hydroxybenzohydrazide hydrochloride | 0.7 | 53 |
| 2-pyromucic acid | 0.6 | 62 |
| (7 samples per section) | | |

INDUSTRIAL APPLICABILITY

As described above, the present invention relates to a method for preventing or controlling plant viral diseases, characterized in that a compound having a peroxidase inducing activity is brought into contact with plants, as well as to an agent for preventing or controlling plant viral diseases containing a compound with peroxidase inducing activity as an active component. In the method of preventing or controlling in the present invention, a compound having a peroxidase inducing activity is brought into direct contact with plants so as to produce resistance against pathogens in the plants before the plants come into contact with pathogens. This prevents pathogens from growing in the plants even when the plants become infected with a pathogen, and thus allows the onset off disease to be prevented.

The resistance of the plant to pathogens can also be increased to effectively prevent the plant from being infected by the pathogens so as to control plant viral diseases and to prevent decreases in plant harvests.

**Claims**

1. A method for preventing or controlling plant viral disease, characterized in that a compound having a peroxidase inducing activity in a plant is brought into contact with a plant by suitable means.

2. A method for preventing or controlling plant viral disease as defined in Claim 1, wherein the compound having a peroxidase inducing activity is at least one selected from benzoic acid derivatives or salts thereof, or compounds having a furan ring or salts thereof.

3. A method for preventing or controlling plant viral disease as defined in Claim 2, wherein the benzoic acid derivative is 4-hydroxybenzohydrazide, salicylhydrazide, or norpseudoephedrine.

4. A method for preventing or controlling plant viral disease as defined in Claim 2, wherein the compound having a furan ring is 2-pyromucic acid, β-(2-furyl)acrylic acid, 2-pyromucylhydrazide, furosemide, furazolidone, 2,2'-bifuran-4,4'-dimethyl-5,5'-dicarboxylic acid, or 3-pyromucic acid.

5. A method for preventing or controlling plant viral disease as defined in Claim 1 or 2, wherein the plant viral disease is mosaic disease of cucumbers, tomatoes, daikon, or Komatsuna (Brassica Rapa).

6. A method for preventing or controlling plant viral disease as defined in Claim 1 and 2, wherein a 2-pyromucic acid or 4-hydroxybenzohydrazide hydrochloride of a compound having a peroxidase inducing activity is used in the form of a composition containing the compound in a concentration of at least 0.1 µM.

7. A composition for preventing or controlling plant viral disease, characterized in that at least one compound as defined in Claim 1 or 2 is contained as an active component.

## INTERNATIONAL SEARCH REPORT

| | International application No. |
|---|---|
| | PCT/JP97/04015 |

**A. CLASSIFICATION OF SUBJECT MATTER**

Int. Cl$^6$ A01N37/10, A01N37/28, A01N43/08, A01N43/76

According to International Patent Classification (IPC) or to both national classification and IPC

**B. FIELDS SEARCHED**

Minimum documentation searched (classification system followed by classification symbols)

Int. Cl$^6$ A01N37/10, A01N37/28, A01N43/08, A01N43/76

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 63-2901, A (Chisso Corp.), January 7, 1988 (07. 01. 88) & US, 4867974, A | 1 - 7 |
| A | JP, 48-52930, A (The Institute of Physical and Chemical Research), July 25, 1973 (25. 07. 73)(Family: none) | 1 - 7 |
| A | JP, 52-66626, A (Sumitomo Chemical Co., Ltd.), June 2, 1977 (02. 06. 77)(Family: none) | 1 - 7 |

☐ Further documents are listed in the continuation of Box C.    ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| January 14, 1998 (14. 01. 98) | January 27, 1998 (27. 01. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)